# EUROPEAN PATENT SPECIFICATION

(11) **EP 2 488 823 B1**
(45) Date of publication and mention of the grant of the patent: **17.07.2013**
(21) Application number: 10785511.6
(22) Date of filing: 15.10.2010
(51) Int. Cl.: G01B 5/255, G01M 17/06

(54) **DEVICE FOR CHECKING BRAKED AND UNBRAKED WHEELS OF VEHICLES**
VORRICHTUNG ZUR ÜBERPRÜFUNG VON FAHRZEUGRÄDERN MIT UND OHNE BREMSUNG
DISPOSITIF DE CONTRÔLE DE ROUES DE VEHICULES FREINEES ET NON FREINEES

(30) Priority: 16.10.2009 BE 200900636
(43) Date of publication of application: 22.08.2012
(73) Proprietor: Lambrecht, Willy, 9070 Destelbergen (BE); Lambrecht, Johan, 9968 Bassevelde (BE)
(72) Inventor: Lambrecht, Willy, 9070 Destelbergen (BE); Lambrecht, Johan, 9968 Bassevelde (BE)
(74) Representative: Ostyn, Frans
(86) International application number: PCT/IB2010/002636
(87) International publication number: WO 2011/045664

(56) References cited:
- EP-A1- 1 199 540
- DE-U1- 20 219 696

## Description

The present invention relates to a device for detecting play and checking the attachment of wheel, steering, suspension and chassis parts of vehicles, wherein said device comprises support means which can generate a movement in two directions (X, Y) exerted on a wheel, said support means comprising a support means which can be moved along the first direction (X).

The present invention relates in particular to a device, particularly to a 3D wheel-checking device for identifying play of parts which are susceptible to wear in a more efficient and improved way by subjecting them to dynamic load. Examples of such parts are: wheel bearings, steering joints and suspension arms and silent blocks of a single-axle or multi-axle vehicle. More specifically, it encompasses parts which are directly or indirectly connected to a wheel and which affect the steering system and stability and therefore also impact safety.

The term play is interpreted in the automotive industry, for example in garages and specialist test centres, as the relative play of a part, with a distinction being made between original and non-original play by visual assessment.

Steering and suspension parts of vehicles are mechanically coupled to a wheel and may, due to wear, cause various kinds of play on a wheel, which types of play can be located in a three-dimensional space as follows:
- play in the longitudinal direction (X): this direction coincides with the axis of symmetry of a vehicle;
- play in the transverse direction (Y): this direction is at right angles to the longitudinal direction;
- play along an upward and downward movement (Z) of a wheel;
- play in a differentiated direction using a combination of X, Y and Z as reference.

There is a causal connection between the play of a wheel and the play of these parts. A deviation from the normal geometrical position of a wheel is proportional to the magnitude of the play of these parts.

DE 20219696 U1 describes a wheel clamp that can be shaken manually in order to detect wheel play.

Until now, rejection or replacement of a part due to visible play has often depended on the subjective opinion of the technician who carries out the assessment. In this case, use can be made of a play detector or 3D wheel manipulator. Apparatus of this type, the operational principle of which is based on movable plates, are known and are described, inter alia, in Belgian patent BE 772697 and European patent EP 1 327 117 in the name of the Applicant of the present patent application.

However, it has been found in practice that this generation of apparatus is no longer adequate when investigating play in steering and suspension parts since the steering system and stability of a vehicle has to meet increasingly higher road traffic demands. The reason for this is that the mechanical connection between the wheel and the chassis in the higher-priced vehicle segment has evolved to a more complex geometrical arrangement of ball joints, rods, arms and rotation points. Furthermore, it is found that, both at national and international level, the authorized test centres for vehicles, the car service branch, and the official authorities, are demanding more uniformity and professionalism in the field of researching play.

It is an object of the present invention to detect play and attachment of wheel, steering and suspension parts of vehicles, without distinguishing between front and rear wheels with regard to the technical applications of the device.

The object of the invention is achieved by means of the technicality of a device, wherein said device comprises support means which can generate a movement of a wheel in two directions, wherein said support means comprise a support means which can be moved along the first direction, and wherein said support means is a carriage which is movable along the first direction and which is provided with wheel-clamping means which are movable in a second direction.

According to the present invention, the various directions are to be understood as follows:
- first (longitudinal) direction (X): movement in a horizontal plane in the longitudinal direction of a vehicle, one wheel of which has been placed on the device;
- second (transverse) direction (Y): movement in the transverse direction of a vehicle, one wheel of which has been placed on the device;

In a preferred embodiment of the device according to the invention, the wheel-clamping means are tiltable between a starting position and a clamping position. Preferably, in the starting position, the wheel-clamping means are arranged parallel to a horizontal drive surface so that a wheel can easily drive over them. Due to the fact that the wheel-clamping means are tiltable, they can generate a third movement, in which case the first generable movement is to be seen as the movement in the horizontal plane as described above, and the second generable movement is to be seen as the movement in the transverse direction as described above.

Consequently, the device according to the invention is capable of applying an upward force on a tyre. By means of the control circuit of the device, this force can be regulated in a way so as to be progressively adjustable and thus determines the transverse activation on a wheel. The device has technical characteristics which make it compatible with measuring and/or indicating means for investigating wheel play.

The device preferably comprises locking means in order to lock the wheel-clamping means in their clamping position.

In a more preferred embodiment of the device according to the invention, the wheel-clamping means comprise a first and a second tilting element, each of which is tiltable between a starting position and a clamping position. As a result thereof, it is possible to lock wheels without having to push a brake pedal, thus making placement of a brake rod between driver's seat and brake pedal (state of the art) redundant.

According to a particular embodiment of the device according to the invention, each tilting element comprises a movable supporting arm. Preferably, each tilting element comprises two lifting arms, with said supporting arm being movable (displaceable) between these lifting arms.

In a preferred embodiment, the abovementioned lifting arms are connected to one another by means of a central shaft. The supporting arm is movable (displaceable) along the shaft. More particularly, the said supporting arm is rotatable about this central shaft. Most particularly, said supporting arm is partly rotatable about this central shaft.

The tilting elements move in an upward direction, together with the supporting arms and press these against a tyre by means of an adjustable upward (first) force. The supporting arms which move in the transverse direction activate a transverse (second) force which is proportional to the first upward force and which is limited by the slip threshold. As a result thereof, the activation of the transverse force can be adjusted proportionally.

According to a more particular embodiment of the device according to the invention, each supporting arm is inclined and is provided with a material or a layer having a suitable coefficient of friction, preferably a high coefficient of friction. The inclined arrangement is due to the fact that the connecting shafts of each supporting arm run at an angle because of the unequal length of the lifting arms. For example, the connecting shafts at each tilting element are at an angle of approximately 11°. Said angle is also dependent on the mutual distance between the lifting arms.

In a preferred embodiment of the device according to the present invention, said carriage furthermore comprises a supporting plate which is provided in order to support a wheel of a vehicle. Depending on its application, the supporting plate is preferably provided with a material or a layer having a suitable coefficient of friction, preferably a high coefficient of friction.

In a more preferred embodiment of the device according to the invention, the device comprises electromechanical, pneumatic and/or hydraulic drive means.

In an advantageous embodiment of the device according to the invention, the device comprises measuring means in order to detect or measure play as a parameter of a wheel of a vehicle.

In a particularly advantageous embodiment of the device according to the invention, it is designed to carry out a number of successive movement cycles using frequency and amplitude control.

The present invention also relates to the use of the device as described above in order to detect the play of one or more parts of wheel, steering and suspension of one or more wheels of a vehicle and/or an aeroplane and to the use of the device as described above in order to measure the braking forces of one or more wheels. The braking forces can be measured in different ways according to an advantageous prior-art choice.

Below, a more detailed description of the device according to the invention is given in order to further illustrate the features of the present invention and indicate additional advantages and details thereof. It will be clear the nothing in the following description can be interpreted as a limitation of the scope of protection sought in the claims.

In this description, reference numerals are used to refer to the attached drawings, in which:
- *Fig. 1* *shows a perspective view of a device for detecting play of wheel, steering, suspension and chassis parts and checking braking forces of vehicles according to the invention;*
- *Fig. 2* *shows a cross section of the device according to the invention, wherein the wheel-clamping means are in their starting position;*
- *Fig. 3* *shows a cross section of the device according to the invention, wherein the wheel-clamping means are in their clamping position;*
- *Figs. 4 and 5* *show a top view of the device according to the invention, wherein the wheel-clamping means are in their starting position, viewed from the front (**Fig. 4**) and viewed, from the back (**Fig. 5**);*
- *Figs. 6 and 7* *show a top view of the device according to the invention, wherein the wheel-clamping means are in their clamping position, viewed from the front (**Fig. 6**) and viewed from the back (**Fig. 7**);*
- *Fig. 8* *shows a sectional view of the device according to the invention, wherein a wheel is clamped by the wheel-clamping means;*
- *Fig. 9* *shows the movement of the movable carriage according to the first direction (X);*
- *Fig. 10* *shows the movement of the wheel-clamping means according to the second direction (Y), wherein the supporting arms of the first and second tilting elements in* *Fig. 10a* *move in opposite directions and, in* *Fig. 10b**, move in the same direction;*
- *Fig. 11* *shows that the supporting arm is rotatable about a central shaft, provided between the lifting arms or the first and second tilting elements, respectively;*
- *Fig. 12* *shows a bottom view of the device according to the invention.*

The present invention relates to a device (1) for detecting play and for checking the attachment of wheel, steering, suspension and chassis parts of vehicles, wherein said device (1) comprises support means which can generate a movement in three directions (X, Y, Z) exerted on a wheel, wherein said support means comprise a transmission member, which is a carriage (2) movable in a first longitudinal direction (X), parallel to the axis of symmetry of a vehicle and which is provided with wheel-clamping means which move, according to a superposition, in a second direction (Y) directed to a wheel of the carriage and move along a third direction (Z) which lifts a wheel of the carriage. The transverse activation is thus proportional to a function of the lifting activation.

The device (1) for detecting play and checking the attachment of wheel, steering and suspension parts of vehicles according to the present invention can exert different (three-dimensional) forces on a wheel (10) of a vehicle, such as for example a passenger car or a lorry, or aeroplane and to this end comprises support means which can generate a movement in at least two directions (X, Y).

The device (1) according to the present invention and as illustrated in the attached figures is composed of three separate mechanisms and a control system which controls one or more mechanisms and is designed to carry out a number of successive movement or operating cycles, namely:
- a first operating cycle (X direction) in which forces are transmitted to a wheel by means of a first mechanism according to a movement in the longitudinal direction of a vehicle. The checks mainly relate to those parts which are loaded in the longitudinal direction during braking of a vehicle, including the brakes themselves, resulting in the axis of a wheel moving in a backward and forward direction with respect to the original axis.
- a second operating cycle (Y direction) in which forces are transmitted to a wheel by means of a second mechanism in the transverse direction of a vehicle. The checks relate to wheel bearings and parts of the steering and suspension;
- a third operating cycle (Z direction) in which forces are transmitted to a wheel by means of a third mechanism according to an upward and downward motion. The checks relate to suspension parts, rotation points and ball joints which are subject to play in the vertical plane.

With regard to the abovementioned operating cycles, it should be noted that the order thereof can be changed and thus, it is for example possible for the third operating cycle to be carried out first, followed by the second and then the first. The three operating cycles can also be activated at the same time.

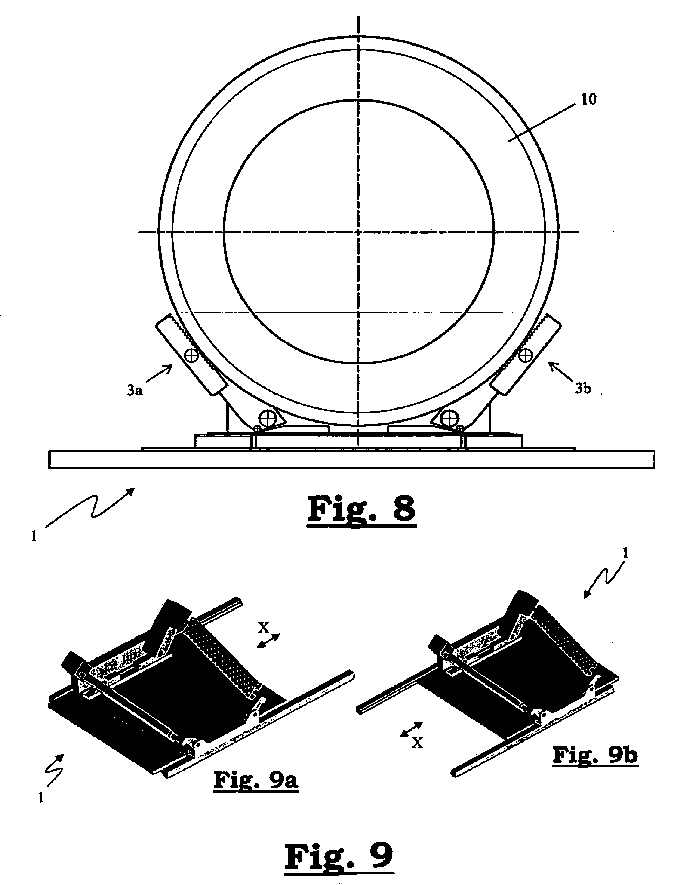

In order to make the first operating cycle possible, the device (1) comprises a movable carriage (2) which, as can be seen in Figs. 9a and 9b, is movable in the first (longitudinal) direction (X) (in the longitudinal direction of the vehicle). The displacement of the carriage (2) in the longitudinal direction may, for example, be effected by means of a spindle-reducer and an electric motor having the following specifications (prototype embodiment):
- motor(*): 200 watts - 3250 rpm;
- reducer: ratio: 1:30;
- spindle and nut pitch 20 mm;
- toothed belt transmission.
(*) with brake tests preferably a power as a function of the maximum brake force to be measured.

The carriage (2) itself, in the form of a prototype, consists of a movable baseplate (13), preferably made from aluminium (dimensions 620 x 665 x 15) to which a supporting plate (9) is attached. The supporting plate (9) is in particular designed to support a wheel (10) of a vehicle. The supporting plate (9) is preferably partly provided with a material or a layer with a suitable coefficient of friction, preferably a high coefficient of friction. Thus, for example, the material may be provided with uneven structures or protuberances in order to raise the coefficient of friction.

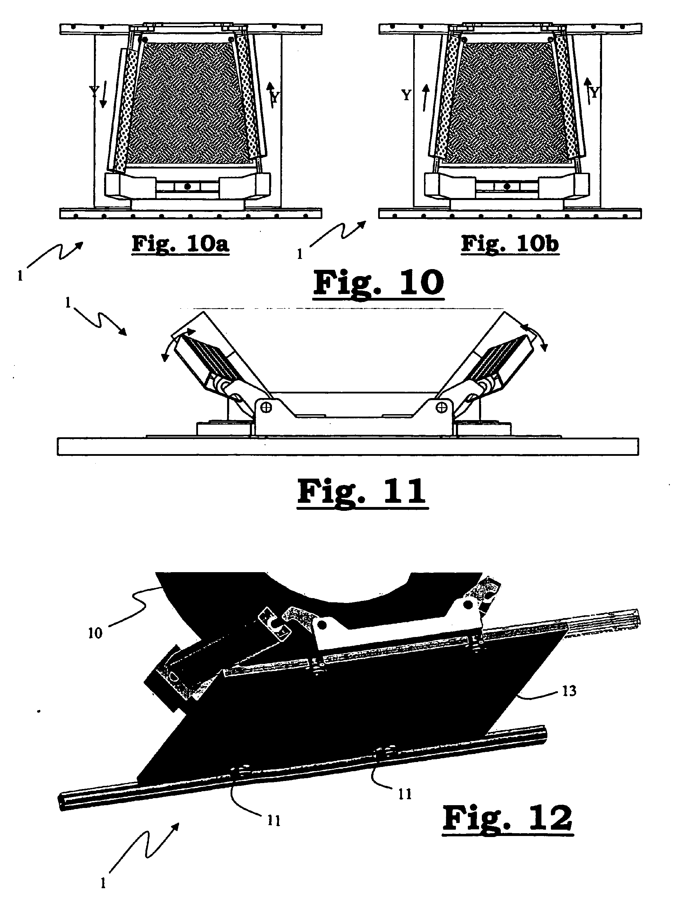

As can be seen from Figs. 9 and 12, roller guides are arranged on the side of the baseplate (13) and the device (1) further comprises a guiding device which can displace the carriage (2) over a certain distance (along the first direction). The guiding device may, for example, comprise two profiled-section rails (12) which are arranged parallel with respect to one another, so that the roller guides (11) can move between these profiled-section rails (12). Due to the roller guides (11), it is possible to displace the carriage (2) over a certain distance, for example over a distance of 600 mm, along the first direction (X) and to generate a first movement in this way. However, it is evident that the device (1) can be adapted technically in such a manner that the carriage (2) can be displaced over larger or smaller distances, depending on the distance between the wheels of the vehicles.

It is intended, in practice, to achieve a wheel-to-wheel arrangement, in other words, in each case one device (1) according to the invention is provided per wheel of the vehicle. An installation for detecting play and checking the attachment of wheel, steering, suspension and chassis parts of vehicles thus comprises four devices (1) according to the invention. They are four devices (apparatus) having identical features which are positioned separately at the centre of the wheels, which also provides a solution for a difference in wheel base and for the difference between the left wheel base and right wheel base. An installation of separate devices (1) comprising a carriage (2), which is movable over 600 mm, makes it possible to bridge a distance of 600 mm twice, so that a device suitable for testing of a front wheel and a device suitable for testing a rear wheel can be positioned according to the various wheel distances (wheel base). The total difference between the minimum distance and the maximum distance is therefore 1.20 metres. There are two greatest displacements for the carriages (2) of a front axle and the carriages (2) of a rear axle:
1. The four carriages are as close to one another as possible, which corresponds to wheels having a minimum wheel base of, for example, 1.90 metres.
2. The four carriages are as far apart from one another as possible. Each carriage is displaced over a distance of ± 600 mm. This corresponds to the investigation of wheels having a maximum wheel base of 1.90 m + 2 x 0.60 m = 3.10 m.

As a result of the evolution of some technical concepts of rear axle steering, there should be no difference in the car mechanical test inspection between wheels of the front axle and of the rear axle. By using such an installation, there will no longer be a difference in the facilities for testing the wheels of a front axle and wheels of a rear axle, which is still the case with the apparatus which are currently being used, i.e. the play detector and the wheel manipulator.

The installation can also lock the wheels on the same axle, thereby making it possible to measure, on the one hand, a wheel displacement in the longitudinal direction of wheels which have or have not been clamped, successively on wheels of the front axle and rear axle. On the other hand, this makes it possible to carry out a brake test, successively on wheels of the front axle and the rear axle.

In order to make the second (Y direction) and third (Z movement) operating cycle possible, the movable carriage (2) is provided with wheel-clamping means (3) which are movable in the second (Y) direction and tiltable between a starting position and a clamping position, as a result of which they can generate a third movement.

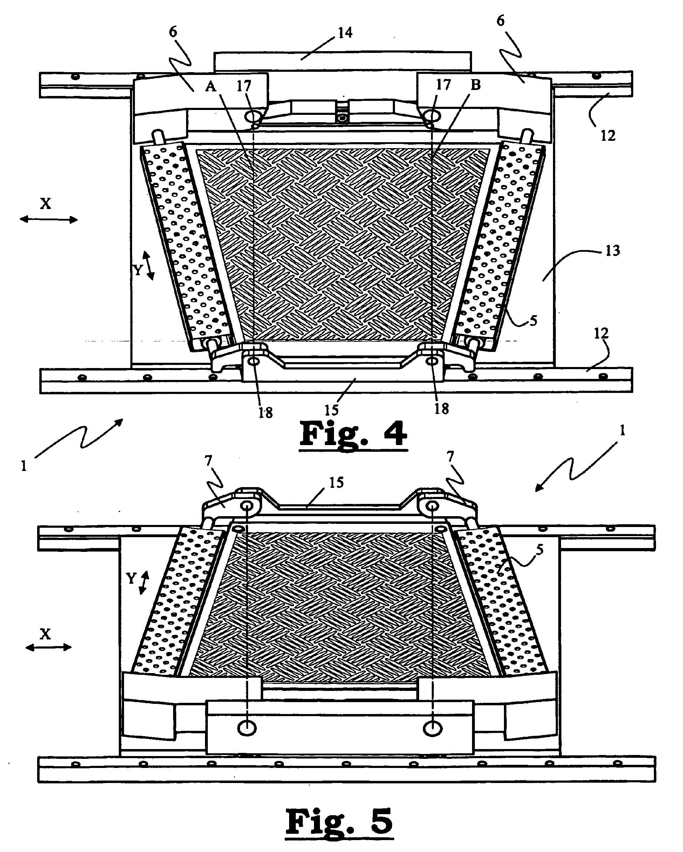

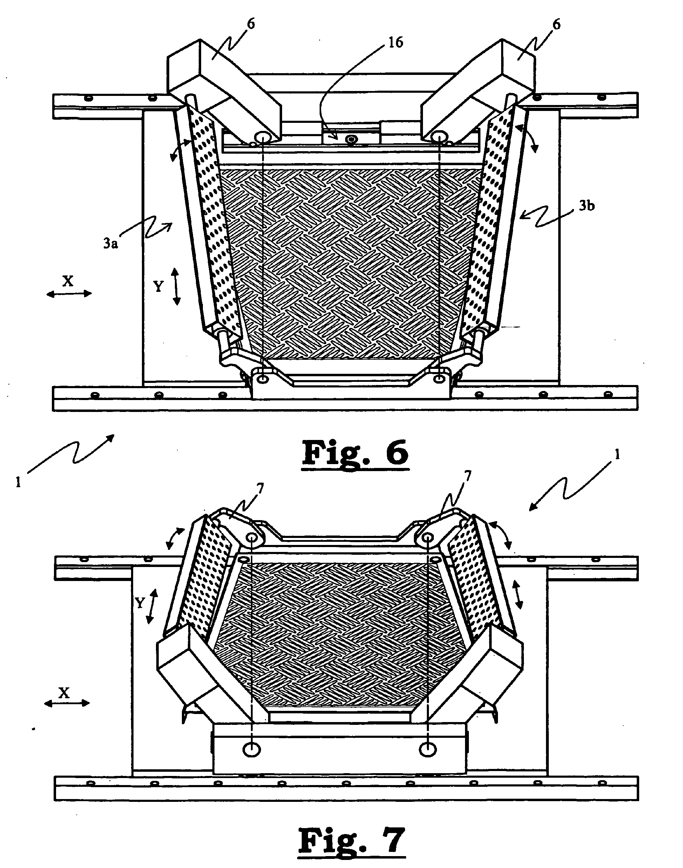

For the purpose of the third operating cycle, the wheel-clamping means (3) are tiltable between a starting position and a clamping position (see inter alia Figs. 6 and 7). In the starting position, and as can be seen in Figs. 4 and 5 inter alia, the wheel-clamping means (3) are virtually in a horizontal plane, which makes it possible to position a vehicle readily and quickly on the device, in particular on the supporting plate (9) of the movable carriage (2).

As can be seen from the attached figures, the wheel-clamping means (3) comprise a first (3a) and second tilting element (3b), each of which is tiltable between a starting position and a clamping position. Each tilting element (3a and 3b) is attached to the movable carriage (2) by means of mutually opposite upright edge profiles (14, 15) and is provided with a movement mechanism in order to move the tilting elements (3a and 3b) between the starting and the clamping position. In the remainder of this patent, the expression first edge profile (14) is understood to mean the profile situated on the rear side of the device (1) (see Fig. 5), and the expression second edge profile (15) is understood to mean the profile situated on the front side of the device (1) (see Fig. 4).

The device (1), in particular the movement mechanism, also comprises locking means (4) in order to lock the wheel-clamping means, in particular the first (3a) and second tilting element (3b), in their clamping position.

Furthermore, each tilting element (3a;3b) comprises a movable supporting arm (5) which is movable along the second direction (Y) so as to be able to make the second operating cycle possible. The supporting arm (5) is movably arranged between two lifting arms (6 and 7) which form part of the tilting element (3a,3b). Each tilting element (3a,3b) thus comprises two lifting arms which are mechanically connected to one another and which will be referred to in the remainder of this patent text as the first (6) and second lifting arms (7).

The first lifting arm (6) may, for example, be made from a solid aluminium block (45 x 77 x 210 mm) which can partly rotate about an axis. This lifting arm (6) acts as a kind of lever and has a maximum angular rotation of ± 54°. On its underside, the first lifting arm (6) is provided with a bevelled side.

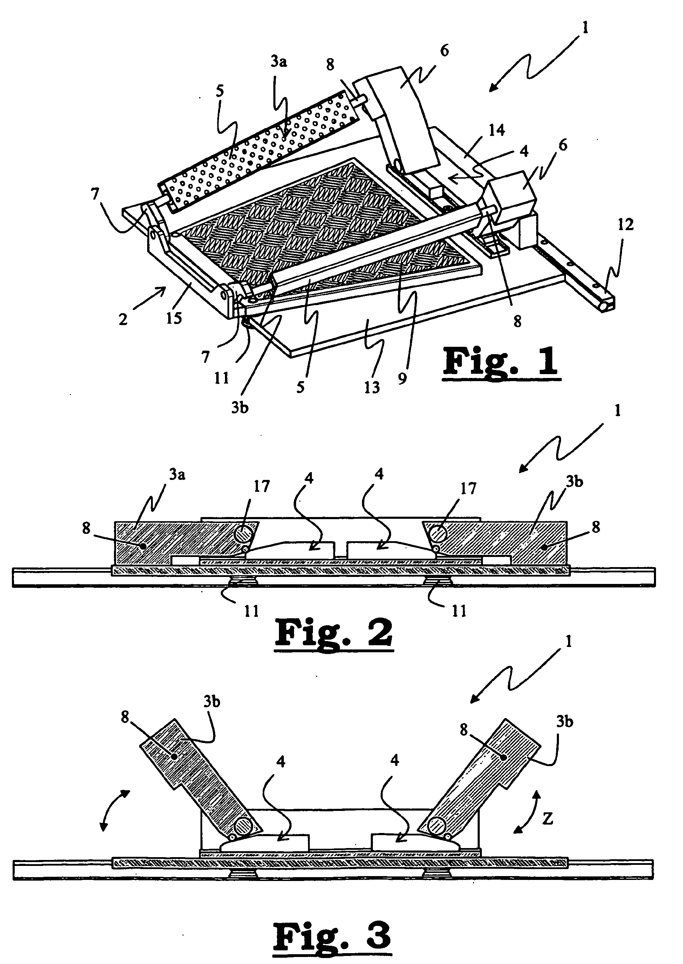

As can be seen in Figs. 2 and 3, the displacement of the tilting elements (3a and 3b) is effected by means of a wedge mechanism, in which a wedge (4) (having a sloping incline of approximately 7°) is pressed against the bevelled underside of the first lifting arm (6). The wedge (4) can be displaced linearly in a wedge track (16).

Since, on the one hand, the first (6) and second lifting arms (7) are mechanically connected to one another and, on the other hand, the rotation points (17, 18) of the lifting arms (6,7) of the respective tilting elements (3a and 3b) have a common axis (A, B) (see e.g. Figs. 4 to 7), the second lifting arm (7) will move along upwards (tilt) until the tilting element is in the clamping position. This is the position in which the supporting arm (5) is pressed against a tyre.

The wedge mechanism also ensures that the tilting elements (3a,3b) remain locked in the clamping position, in particular when the carriage (2) is displaced along the first direction.

The wedge mechanism can be driven pneumatically (for example by means of a pneumatic cylinder having a diameter of 50 mm and a stroke length of 80 mm). However, other known ways of displacing (tilting) and/or driving the tilting elements (3a and 3b) are also covered by the scope of protection of the present invention.

As has been mentioned above, a supporting arm (5) is movable between the first (6) and second lifting arms (7). In addition, said supporting arm (5), as illustrated in Fig. 11, is provided between said lifting arms (6, 7) so as to be rotatable about a central shaft (8). For stability, additional shafts may be provided between the lifting arms (6, 7), in particular next to the central shaft (8).

In order to make it possible to check different vehicles, in particular wheels of different diameters, by means of the device according to the invention, each supporting arm (5) has an inclined shape. This is achieved by making the length of the first (6) and second lifting arms (7) different. Thus, for example, the distance between the rotation point (17) and the start of the central shaft (8) at the first lifting arm (6) is 150 mm and the distance between the rotation point (18) and the start of the central shaft (8) at the second lifting arm (7) is 55 mm. As a result of this difference in length, the connecting shafts (8) of each tilting element (3a, 3b) are at an angle of ± 11°. The mutual distance between the lifting arms (6 and 7) also determines the slope of a supporting arm (5). This arrangement optimizes clamping and offers a solution for wheels of different diameters. It is found that the diameters of wheels increase as the track increases.

When the upward position of the arms increases, the lifting arms (6 and 7) reach a maximum angular rotation of approximately 54°, which corresponds to a maximum height of a supporting arm (5) of between 85 mm on the side (front) of the second lifting arm (7) and 145 mm on the side (back) of the first lifting arm (6).

As has already been discussed above, the supporting arm (5) of each tilting element (3a, 3b) is movable along the second (transversal) direction (Y). This may, for example, be effected pneumatically by means of an air cylinder (diameter 50 mm and stroke length 80 mm). The supporting arm (5) is, for example, made from a U-shaped profile (2 x 30 x 65 mm) and provided at the top with a surface structure having a high coefficient of friction.

As is illustrated in Fig. 10a, the supporting arms (5) of the respective tilting elements (3a,3b) can move in opposite directions or, as is illustrated in Fig. 10b, in the same direction.

Due to the structural arrangement of the supporting arms (5) which can each move (separately) along the second (Y) direction and which are fitted to a tilting element (3a;3b) which can tilt between a starting position and a clamping position in order to thus generate a third (tilting) movement, and due to the fact that the assembly is mounted on a carriage which is movable along the first (X) direction, this device (1) can act as a three-dimensional implement.

A device (1) according to the present invention in which the tilting elements (3a, 3b), as illustrated in Fig. 8, are in their clamping position, in which the supporting arms (5) are in a fixed position and press against the tyre. As a result of the displacement of the carriage, the wheel will be carried along in the longitudinal direction. The supporting arms prevent the wheel from rotating and act as external brakes.

Below, some possible practical embodiments and applications of the device (1) according to the invention will be given. It should be noted here that a four-wheeled vehicle is checked by means of an installation for detecting play and checking the attachment of wheel, steering, suspension and chassis parts of vehicles, which comprises four devices (1) according to the invention. These are four devices (apparatus) with identical features, which are positioned separately at the wheels, with each wheel being positioned in the centre of the supporting plate (9) of the movable carriage (2). During a wheel inspection, those wheels which are on the same axles are in each case checked.

### (I) Movement along the first (X) direction (longitudinal direction);

In this example, the wheels on the same axle are checked and the wheel-clamping means (first and second tilting element) are in their clamping position. The wheels of the axle which are not to be inspected are also clamped by their respective devices.

By moving the carriage (2) which completely or partly supports a wheel which is to be subjected to a wheel inspection, forces in the longitudinal direction are activated, even if the brake pedal is not pushed. This in contrast with the current inspection technique, where a rod and air cylinder is used as an aid and is placed between the driver's seat and the brake pedal. This method is redundant and limiting due to the servo action when the engine is not running. In addition, it is possible that wheels provided with a brake force limiter are not sufficiently braked.

The device (1) according to the present invention offers a solution to this problem. By means of the device (1), it is possible to lock a wheel (10) without pushing a brake pedal.

A regular displacement of the carriage (2) alternately between a backward and forward movement, results in a variation of forces on those parts which are associated with this movement. In this way, play can be visualized or measured.

By means of the device (1) according to the invention, it is also possible to measure the wheel displacement in the longitudinal direction, for which purpose the device (1) comprises measuring means. In order to measure the displacement of a wheel in the longitudinal direction, partly influenced as a result of play, the following two options exist:
(a) The displacement of one carriage (2) is measured with the wheel-clamping means (3a,3b) in their clamping position, without pushing the brake pedal. All other wheels are clamped securely.
(b) The displacement of one carriage (2) is measured without the respective wheel-clamping means being in their clamping position, but the brake pedal is pressed. All other wheels are clamped securely.

Another important application for which the device (1) is suitable is measuring the braking force which is exerted by the supporting surface portion (the supporting plate (9)) of the movable carriage (9) in the contact surface of a braked wheel. In this case, the wheel-clamping means (3) of the braked wheel to be checked are in their starting position and the other wheels are clamped. The measurement of a brake force is based on the principle of a dynamometer. A carriage (2) moves a supporting plate (9) on which a braked wheel rests with its entire mass and generates a radial force on the circumference of a tyre. This force can be measured, preferably electronically, and is equal and opposite to the force which brakes a wheel. The maximum brake force measured is limited due to the slip threshold between tyre and supporting plate and depends on the coefficient of friction between the former and the latter, something which applies to all brake tests.

### (II) Third movement as a result of tilting of the wheel-clamping means (upward direction)

By moving the wheel-clamping means from their starting position to the clamping position, and subsequently lifting a wheel off the supporting plate by means of a lifting apparatus, it becomes possible to exert another upward force on the tyre by means of the wheel-clamping means. By converting this upward movement into an intermittent upward and downward movement, the wheel-clamping means will activate the up and down movement of the wheel at intervals.

Parts connected to the wheel and play related to this activation will undergo the same variation.

As a result of this operating method, play of, inter alia the ball joint can be made obvious. It is an important contribution to locating play which may cause the so-called breaking-out of this ball joint (ball detaches) which is regarded as one of the most dangerous fractures which a suspension part can suffer, since this results in the wheel detaching from the chassis of a vehicle.

Measurement of this upward wheel play may also constitute the objective of an adapted measurement system.

### (III) Movement along the second (Y) direction (transverse direction)

By carrying out this movement, it is possible, on the one hand, to check the steering system and, on the other hand, to check the wheel bearings and suspension parts.

### a) Inspection of the steering system

The vehicle is positioned on the devices in such a way that the centre of the wheels of a steering axle is lined up with the centre of the movable carriage (2), in particular the centre of the supporting plate (9). A lifting apparatus ensures that the tyre and the movable carriage (2) no longer contact one another by slightly lifting the steered wheels. Then, the wheel-clamping means (3a and 3b) are pressed against the tyre. By then moving the supporting arms of the tilting elements (3a, 3b) in the transverse direction, various movement cycles are possible: either in opposite directions (see Fig. 10a) or in the same direction (see Fig. 10b).

When inspecting two steered wheels on the same axle, this results either in a reciprocating pivot position of the steered wheels (Fig. 10a) or in an activation of the steered wheels successively in the direction of the toe-in and toe-out (Fig. 10b).

### b) Inspection of the wheel bearings and suspension parts

The vehicle is positioned on the devices in such a manner that the centre of the wheels of one axle is lined up with the centre of the movable carriage (2), in particular the centre of the supporting plate (9). A lifting apparatus ensures that the tyre and the movable carriage (2) no longer contact one another by slightly lifting an axle. Then, the wheel-clamping means (3a and 3b) are pressed against the tyre. By then causing the supporting arms of the tilting elements (3 a, 3b) to carry out the same reciprocating movement (in the same direction) in the transverse direction (see Fig. 10b), the wheel-clamping means activate an alternating force in the contact points with a tyre. In this case, the wheel will act as a lever, as a result of which a tilting moment is produced on a wheel and play of bearings is activated.

Suspension parts which are subject to transverse play can also be activated hereby. The transverse activation depends on the force with which the wheel-clamping means are pressed and is adjustable by means of the wedge mechanism and also by the position which a lifting installation takes up with respect to the supporting arms.

Finally, we would like to point out that an analogous transverse activation according to the present invention can be achieved by means of the following variant embodiment in which the device comprises two tilting elements which can move independently from one another in the transverse direction (Y) (second direction) and in which the supporting arms and the lifting arms move simultaneously along this direction. In this case, the support means are composed of two symmetrical parts.

## Claims

1. Device (1) for detecting play and checking the attachment of wheel, steering, suspension and chassis parts of vehicles, wherein said device (1) comprises support means which can generate a movement in two directions (X, Y) exerted on a wheel, said support means comprising a support means which can be moved along a first direction (X), **characterized in that** said support means which can be moved is a carriage (2) which is movable along said first direction (x) and which is provided with wheel-clamping means (3) which are movable in a second (y, z) direction.

2. Device (1) according to Claim 1, **characterized in that** the wheel-clamping means (3) are tiltable between a starting position and a clamping position.

3. Device (1) according to Claim 2, **characterized in that** the device (1) comprises locking means (4) in order to lock the wheel-clamping means (3) in their clamping position.

4. Device (1) according to one of the preceding claims, **characterized in that** the wheel-clamping means (3) comprise a first (3a) and a second tilting element (3b), each of which is tiltable between a starting position and a clamping position.

5. Device (1) according to Claim 4, **characterized in that** each tilting element (3a;3b) comprises a movable supporting arm (5).

6. Device (1) according to Claim 5, **characterized in that** each tilting element (3a;3b) comprises two lifting arms (6, 7), wherein said supporting arm (5) is movable between these lifting arms (6, 7).

7. Device (1) according to Claim 5 or 6, **characterized in that** said supporting arm (5) is rotatable about a central shaft (8), provided between said lifting arms (6, 7).

8. Device (1) according to one of Claims 5 to 7, **characterized in that** each supporting arm (5) is inclined and is provided with a material or a layer having a suitable coefficient of friction, preferably a high coefficient of friction.

9. Device (1) according to one of the preceding claims, **characterized in that** said carriage (2) furthermore comprises a supporting plate (9) provided in order to support a wheel (10) of a vehicle.

10. Device (1) according to Claim 9, **characterized in that** the supporting plate (9) is provided with a material or a layer having a suitable coefficient of friction, preferably a high coefficient of friction.

11. Device (1) according to one of the preceding claims, **characterized in that** the device (1) comprises electromechanical, pneumatic and/or hydraulic drive means.

12. Device (1) according to one of the preceding claims, **characterized in that** the device comprises measuring means in order to detect or measure play as a parameter of a wheel of a vehicle.

13. Device (1) according to one of the preceding claims, **characterized in that** the device (1) is designed to carry out a number of successive movement cycles using frequency and amplitude control.

14. Use of the device (1) according to one of Claims 1 to 13 for detecting the play of one or more parts of wheel, steering and suspension of one or more wheels of a vehicle and/or aeroplane.

15. Use of the device (1) according to one of Claims 1 to 13 for measuring the braking forces of one or more wheels.

## Patentansprüche

1. Vorrichtung (1) zum Feststellen von Spiel und zum Prüfen der Befestigung von Rad-, Lenk-, Aufhängungs- und Fahrwerksteilen von Fahrzeugen, wobei die Vorrichtung (1) Auflagemittel umfasst, die eine auf ein Rad ausgeübte Bewegung in zwei Richtungen (X, Y) erzeugen kann, wobei die Auflagemittel ein Auflagemittel umfassen, das entlang einer ersten Richtung (X) bewegt werden kann, **dadurch gekennzeichnet, dass** das Auflagemittel, das bewegt werden kann, ein Laufwagen (2) ist, der entlang der ersten Richtung (X) beweglich ist und der mit Radfeststellmitteln (3) ausgestattet ist, die in einer zweiten Richtung (Y, Z) beweglich sind.

2. Vorrichtung (1) nach Anspruch 1, **dadurch gekennzeichnet, dass** die Radfeststellmittel (3) zwischen einer Ausgangsposition und einer Feststellposition kippbar sind.

3. Vorrichtung (1) nach Anspruch 2, **dadurch gekennzeichnet, dass** die Vorrichtung (1) Arretierungsmittel (4) umfasst, um die Radfeststellmittel (3) in ihrer Feststellposition zu arretieren.

4. Vorrichtung (1) nach einem der vorhergehenden Ansprüche, **dadurch gekennzeichnet, dass** die Radfeststellmittel (3) ein erstes (3a) und ein zweites Kippelement (3b) umfassen, die jeweils zwischen einer Ausgangsposition und einer Feststellposition kippbar sind.

5. Vorrichtung (1) nach Anspruch 4, **dadurch gekennzeichnet, dass** jedes Kippelement (3a, 3b) einen beweglichen Auflagearm (5) umfasst.

6. Vorrichtung (1) nach Anspruch 5, **dadurch gekennzeichnet, dass** jedes Kippelement (3a, 3b) zwei Hubarme (6, 7) umfasst, wobei der Auflagearm (5) zwischen diesen Hubarmen (6, 7) beweglich ist.

7. Vorrichtung (1) nach Anspruch 5 oder 6, **dadurch gekennzeichnet, dass** der Auflagearm (5) um eine Mittelwelle (8) drehbar ist, die zwischen den Hubarmen (6, 7) bereitgestellt ist.

8. Vorrichtung (1) nach einem der Ansprüche 5 bis 7, **dadurch gekennzeichnet, dass** jeder Auflagearm (5) geneigt ist und mit einem Material oder einer Schicht mit einem geeigneten Reibungskoeffizienten, vorzugsweise mit einem hohen Reibungskoeffizienten, ausgestattet ist.

9. Vorrichtung (1) nach einem der vorhergehenden Ansprüche, **dadurch gekennzeichnet, dass** der Laufwagen (2) ferner eine Auflageplatte (9) umfasst, die als Auflage für ein Rad (10) eines Fahrzeugs dient.

10. Vorrichtung (1) nach Anspruch 9, **dadurch gekennzeichnet, dass** die Auflageplatte (9) mit einem Material oder einer Schicht mit einem geeigneten Reibungskoeffizienten, vorzugsweise mit einem hohen Reibungskoeffizienten, ausgestattet ist.

11. Vorrichtung (1) nach einem der vorhergehenden Ansprüche, **dadurch gekennzeichnet, dass** die Vorrichtung (1) elektromechanische, pneumatische und/oder hydraulische Antriebsmittel umfasst.

12. Vorrichtung (1) nach einem der vorhergehenden Ansprüche, **dadurch gekennzeichnet, dass** die Vorrichtung Messmittel zum Feststellen oder Messen von Spiel als ein Parameter eines Rades eines Fahrzeugs umfasst.

13. Vorrichtung (1) nach einem der vorhergehenden Ansprüche, **dadurch gekennzeichnet, dass** die Vorrichtung (1) dafür konstruiert ist, eine Anzahl aufeinanderfolgender Bewegungszyklen unter Verwendung von Frequenz- und Amplitudensteuerung auszuführen.

14. Verwendung der Vorrichtung (1) nach einem der Ansprüche 1 bis 13 zum Feststellen des Spiels eines oder mehrerer Teile von Rad, Lenkung und Aufhängung eines oder mehrerer Räder eines Fahrzeugs und/oder Flugzeugs.

15. Verwendung der Vorrichtung (1) nach einem der Ansprüche 1 bis 13 zum Messen der Bremskräfte eines oder mehrerer Räder.

## Revendications

1. Dispositif (1) destiné à détecter le jeu et à vérifier la fixation de parties de roue, de direction, de suspension et de châssis de véhicules, dans lequel ledit dispositif (1) comprend des moyens de support qui peuvent générer un mouvement dans deux directions (X, Y) exercé sur une roue, lesdits moyens de support comprenant un moyen de support qui peut être déplacé le long d'une première direction (X), **caractérisé en ce que** ledit moyen de support qui peut être déplacé est un chariot (2) qui est mobile le long de ladite première direction (X) et qui est doté de moyens de crampon de roue (3) qui sont mobiles dans une seconde (Y, Z) direction.

2. Dispositif (1) selon la revendication 1, **caractérisé en ce que** les moyens de crampon de roue (3) peuvent s'incliner entre une position de départ et une position de cramponnage.

3. Dispositif (1) selon la revendication 2, **caractérisé en ce que** le dispositif (1) comprend des moyens de verrouillage (4) afin de verrouiller les moyens de crampon de roue (3) dans leur position de cramponnage.

4. Dispositif (1) selon l'une quelconque des revendications précédentes, **caractérisé en ce que** les moyens de crampon de roue (3) comprennent un premier (3a) et un second élément inclinable (3b), chacun desquels peut s'incliner entre une première position et une position de cramponnage.

5. Dispositif (1) selon la revendication 4, **caractérisé en ce que** chaque élément inclinable (3a ; 3b) comprend un bras de support mobile (5).

6. Dispositif (1) selon la revendication 5, **caractérisé en ce que** chaque élément inclinable (3a ; 3b) comprend deux bras de levage (6, 7), dans lequel ledit bras de support (5) est mobile entre ces bras de levage (6, 7).

7. Dispositif (1) selon la revendication 5 ou 6, **caractérisé en ce que** ledit bras de support (5) peut être mis en rotation autour d'un arbre central (8), agencé entre lesdits bras de levage (6, 7).

8. Dispositif (1) selon l'une quelconque des revendications 5 à 7, **caractérisé en ce que** chaque bras de support (5) est incliné et est doté d'un matériau ou d'une couche ayant un coefficient de frottement adapté, de préférence un coefficient de frottement élevé.

9. Dispositif (1) selon l'une quelconque des revendications précédentes, **caractérisé en ce que** ledit chariot (2) comprend en outre une plaque de support (9) fournie afin de supporter une roue (10) d'un véhicule.

10. Dispositif (1) selon la revendication 9, **caractérisé en ce que** la plaque de support (9) est dotée d'un matériau ou d'une couche ayant un coefficient de frottement adapté, de préférence un coefficient de frottement élevé.

11. Dispositif (1) selon l'une quelconque des revendications précédentes, **caractérisé en ce que** le dispositif (1) comprend des moyens d'entraînement électromécaniques, pneumatiques et/ou hydrauliques.

12. Dispositif (1) selon l'une quelconque des revendications précédentes, **caractérisé en ce que** le dispositif comprend un moyen de mesure afin de détecter ou de mesurer le jeu en tant que paramètre d'une roue d'un véhicule.

13. Dispositif (1) selon l'une quelconque des revendications précédentes, **caractérisé en ce que** le dispositif (1) est conçu pour réaliser un certain nombre de cycles de mouvement successifs en utilisant une commande de fréquence et d'amplitude.

14. Utilisation du dispositif (1) selon l'une quelconque des revendications 1 à 13 pour détecter le jeu d'une ou de plusieurs parties de roue, de direction et de suspension d'une ou plusieurs roues d'un véhicule et/ou aéronef.

15. Utilisation du dispositif (1) selon l'une quelconque des revendications 1 à 13 pour mesurer les forces de freinage d'une ou plusieurs roues.
